# EUROPEAN PATENT APPLICATION

(11) **EP 4 535 527 A1**
(43) Date of publication of application: **09.04.2025**
(21) Application number: 24203837.0
(22) Date of filing: 01.10.2024
(51) Int. Cl.: H01M 50/209, H01M 50/507, H01M 50/548

(54) **BATTERY MODULE**

(30) Priority: 06.10.2023 KR 20230133092
(71) Applicant: SAMSUNG SDI CO., LTD., Yongin-si, Gyeonggi-do 17084 (KR)
(72) Inventor: Ahn, Byung Kook, 16678 Suwon-si, Gyeonggi-do (KR)
(74) Representative: Gulde & Partner

(57) **Abstract**

The disclosure relates to a battery module, including a battery cell, a side plate facing a side of the battery cell and provided with a first opening portion, a cell terminal protruding from the battery cell toward the side plate, a busbar holder coupled to the side plate, disposed between the side plate and the battery cell, and provided with a second opening portion communicating with the first opening portion, and a busbar that is supported by the busbar holder, covers the second opening portion, and connected to the cell terminal.

## Description

### BACKGROUND

### 1. Field of the Invention

The present invention relates to a battery module.

### 2. Discussion of Related Art

In general, with rapidly increasing demand for portable electronics, such as laptops, video cameras, and mobile phones, and commercialization of robots and electric vehicles, research is actively carried out to develop high-performance secondary batteries enabling repeated charging/discharging.

Secondary batteries are widely used in small devices, such as portable electronics, as well as medium and large devices, such as electric vehicles and energy storage systems (ESSs), for power generation and energy storage. In particular, in medium or large devices, multiple battery cells are electrically connected to each other to form a battery module to enhance output and/or capacity of the batteries.

In a battery module in which terminals are formed on a side of a battery cell, when a side plate that covers the side of the battery cell and a busbar holder are disposed in different positions, an assembly process of the battery module can be complicated.

### SUMMARY OF THE INVENTION

The present invention is set out in the appended set of claims, wherein the drawings and respective description relate to advantageous embodiments thereof.

According to an aspect of embodiments of the present invention a battery module is provided in which a busbar holder and a side plate may be disposed together on a side of a battery cell where a cell terminal is located.

The above and other aspects and features of the present disclosure will be described in or will be apparent from the following description of some embodiments of the present disclosure.

According to an aspect of the present invention, a battery module includes: a battery cell; a side plate facing a side of the battery cell and including a first opening portion; a cell terminal protruding from the battery cell toward the side plate; a busbar holder coupled to the side plate, located between the side plate and the battery cell, and including a second opening portion in communication with the first opening portion; and a busbar supported by the busbar holder, covering the second opening portion, and connected to the cell terminal.

The side plate, the cell terminal, and the busbar holder may be provided as a pair of side plates, a pair of cell terminals, and a pair of busbar holders, respectively, which are symmetrically arranged on both sides of the battery cell.

The busbar and the cell terminal may be melt-joined by welding.

The busbar and the cell terminal may be laser-welded through the first opening portion and the second opening portion.

The busbar holder may include a busbar support portion supporting the busbar and a busbar seating portion protruding from the busbar support portion and on which the busbar is seated.

The busbar holder may include first busbars arranged on one side or both sides of the busbar holder in a longitudinal direction and second busbars arranged to be spaced apart from each other in the longitudinal direction of the busbar holder.

The busbar support portion may include a holder ring portion around (e.g., surrounding) the first busbar.

The busbar support portion may include a locking member to fixedly lock the second busbar.

The second busbar may include a busbar body portion fixed to the busbar support portion by the locking member and in contact with the cell terminal, and a busbar extension portion extending from the busbar body portion and accommodated in the busbar seating portion.

The battery module may further include a flexible substrate on the busbar holder and electrically connected to the busbar.

The flexible substrate may include a substrate main body coupled to the busbar holder and a sensor unit extending from the substrate main body and in contact with the busbar.

The sensor unit may be joined to the busbar by welding.

The battery module may further include a first insulating member provided on the side plate and covering the first opening portion.

The busbar holder may include a protrusion protruding along an edge of the second opening portion and inserted in the first opening portion.

The protrusion may include a coupling member to be caught on and coupled to the side plates.

The side plate may include a coupling groove recessed in an edge of the first opening portion, and the coupling groove may include a locking protrusion to catch the coupling member.

The coupling member may include a hook portion to be caught on the locking protrusion.

The battery module may further include end plates facing a front and a rear of the battery cell.

The side plate and the end plates may be melt-joined by welding.

The battery module may further include a second insulating member between the battery cell and an end plate.

According to an aspect of embodiments of the present invention, a battery module can improve space efficiency by placing a busbar holder and a side plate together on a side of a battery cell where a cell terminal is located.

According to another aspect of embodiments of the present invention, a battery module can simplify an assembly process by integrating a side plate that protects a side of a battery cell where a cell terminal is located and a busbar holder that is electrically connected to the battery cell.

However, the aspects and effects that can be achieved through the present invention are not limited to the above-described aspects and effects, and other technical aspects and effects that are not described will be clearly understood by those skilled in the art from the description of the present invention described below.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure should not be construed as being limited to the drawings:
FIG. 1 is a perspective view schematically showing a battery module according to an embodiment of the present invention;
FIG. 2 is an exploded perspective view schematically showing a battery module according to an embodiment of the present invention;
FIG. 3 is an exploded perspective view schematically showing a coupling relationship between a busbar holder and a busbar in a battery module according to an embodiment of the present invention;
FIG. 4 is a perspective view schematically showing a busbar holder in a battery module according to an embodiment of the present invention;
FIG. 5 is a perspective view schematically showing a busbar coupled to a busbar holder in a battery module according to an embodiment of the present invention;
FIG. 6 is an exploded perspective view showing a coupling relationship between a busbar holder and a flexible substrate in a battery module according to an embodiment of the present invention;
FIGS. 7 and 8 are exploded perspective views showing a coupling relationship between side plates and busbar holders in a battery module according to an embodiment of the present invention;
FIG. 9 is a perspective view schematically showing a busbar holder coupled to a side plate in a battery module according to an embodiment of the present invention;
FIG. 10 is a cross-sectional view along the line A-A in FIG.9;
FIGS. 11 and 12 are exploded perspective views showing a coupling relationship between side plates and first insulating members in a battery module according to an embodiment of the present invention; and
FIG. 13 is a view schematically showing a welded state of a battery module according to an embodiment of the present invention.

### DETAILED DESCRIPTION

Herein, some embodiments of the present disclosure will be described, in further detail, with reference to the accompanying drawings. The terms or words used in this specification and claims should not be construed as being limited to usual or dictionary meanings and should be interpreted as having a meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are some example embodiments of the present disclosure and do not represent all of the technical ideas, aspects, and features of the present disclosure. Accordingly, it is to be understood that there may be various equivalents and modifications that can replace or modify the embodiments described herein at the time of filing this application.

It is to be understood that when a first element or layer is referred to as being "on," "connected to," or "coupled to" a second element or layer, the first element may be directly on, connected, or coupled to the second element or layer or one or more intervening elements or layers may also be present. When a first element or layer is referred to as being "directly disposed on," "directly connected to," or "directly coupled to" a second element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first", "second", "third", etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, the applicant reserves the right to amend this specification, including the claims, to expressly recite any subrange subsumed within the ranges expressly recited herein.

References to two compared elements, features, etc. as being "the same" may mean that they are the same or substantially the same. Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that one or more other components may be interposed between the component and any arbitrary element disposed (or located or positioned) on (or under) the component.

In addition, it is to be understood that when an element is referred to as being "coupled," "linked" or "connected" to another element, the elements may be directly "coupled," "linked" or "connected" to each other, or one or more intervening elements may be present therebetween, through which the element may be "coupled," "linked" or "connected" to another element. In addition, when a part is referred to as being "electrically coupled" to another part, the part may be directly connected to another part or one or more intervening parts may be present therebetween such that the part and another part are indirectly connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

A battery pack according to one or more embodiments includes at least one battery module and a pack housing having an accommodation space in which the at least one battery module is accommodated.

The battery module may include a plurality of battery cells and a module housing. The battery cells may be accommodated inside the module housing in a stacked form (or stacked arrangement or configuration). Each battery cell may have a positive electrode terminal and a negative electrode terminal and may be a circular type, a prismatic type, or a pouch type according to a shape of a battery. In the present specification, a battery cell may also be referred to as a secondary battery, a battery, or a cell.

In the battery pack, a cell stack may constitute a module stacked in place of the battery module. The cell stack may be accommodated in an accommodation space of the pack housing or may be accommodated in an accommodation space partitioned by a frame, a partition wall, etc.

The battery cell may generate a large amount of heat during charging/discharging. The generated heat may be accumulated in the battery cell, thereby accelerating deterioration of the battery cell. Accordingly, the battery pack may further include a cooling member to remove the generated heat and thereby suppress deterioration of the battery cell. The cooling member may be provided at a bottom of the accommodation space where the battery cell is provided but is not limited thereto and may be provided at a top or side depending on the battery pack.

The battery cell may be configured such that exhaust gas generated inside the battery cell under abnormal operating conditions, also known as thermal runaway or a thermal event, is discharged to the outside of the battery cell. The battery pack or the battery module may include an exhaust port for discharging the exhaust gas to prevent or reduce damage to the battery pack or module by the exhaust gas.

The battery pack may include a battery and a battery management system (BMS) for managing the battery. The battery management system may include a detection device, a balancing device, and a control device. The battery module may include a plurality of cells connected to each other in series and/or parallel. The battery modules may be connected to each other in series and/or in parallel.

The detection device may detect a state of a battery (e.g., voltage, current, temperature, etc.) to output state information indicating the state of the battery. The detection device may detect the voltage of each cell constituting the battery or of each battery module. The detection device may detect current flowing through each battery module constituting the battery module or the battery pack. The detection device may also detect the temperature of a cell and/or module on at least one point of the battery and/or an ambient temperature.

The balancing device may perform a balancing operation of a battery module and/or cells constituting the battery module. The control device may receive state information (e.g., voltage, current, temperature, etc.) of the battery module from the detection device. The control device may monitor and calculate the state of the battery module (e.g., voltage, current, temperature, state of charge (SOC), life span (state of health (SOH)), etc.) on the basis of the state information received from the detection device. In addition, on the basis of the monitored state information, the control device may perform a control function (e.g., temperature control, balancing control, charge/discharge control, etc.) and a protection function (e.g., over-discharge, over-charge, overcurrent protection, short circuit, fire extinguishing function, etc.). In addition, the control device may perform a wired or wireless communication function with an external device of the battery pack (e.g., a higher level controller or vehicle, charger, power conversion system, etc.).

The control device may control charging/discharging operation and protection operation of the battery. To this end, the control device may include a charge/discharge control unit, a balancing control unit, and/or a protection unit.

The battery management system is a system that monitors the battery state and performs diagnosis and control, communication, and protection functions, and may calculate the charge/discharge state, calculate battery life or state of health (SOH), cut off, as necessary, battery power (e.g., relay control), control thermal management (e.g., cooling, heating, etc.), perform a high-voltage interlock function, and/or may detect and/or calculate insulation and short circuit conditions.

A relay may be a mechanical contactor that is turned on and off by a magnetic force of a coil or a semiconductor switch, such as a metal oxide semiconductor field effect transistor (MOSFET).

The relay control has a function of cutting off the power supply from the battery if (or when) a problem occurs in the vehicle and the battery system and may include one or more relays and pre-charge relays at the positive terminal and the negative terminal, respectively.

In the pre-charge control, there is a risk of inrush current occurring in the high-voltage capacitor on the input side of the inverter when the battery load is connected. Thus, to prevent inrush current when starting a vehicle, the pre-charge relay may be operated before connecting the main relay and the pre-charge resistor may be connected.

The high-voltage interlock is a circuit that uses a small signal to detect whether or not all high-voltage parts of the entire vehicle system are connected and may have a function of forcibly opening a relay if (or when) an opening occurs at even one location on the entire loop.

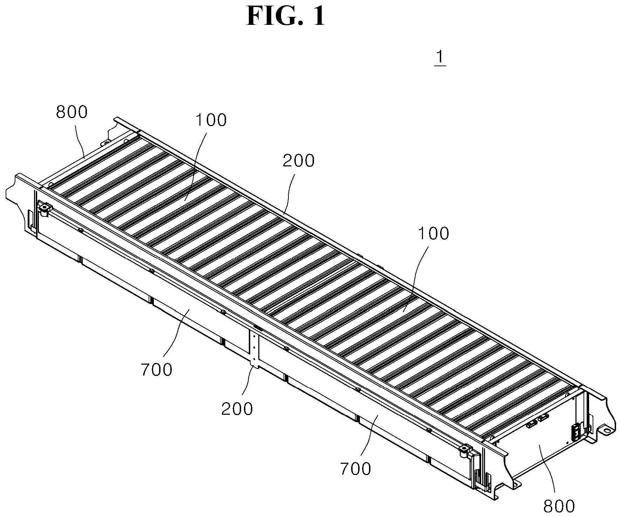

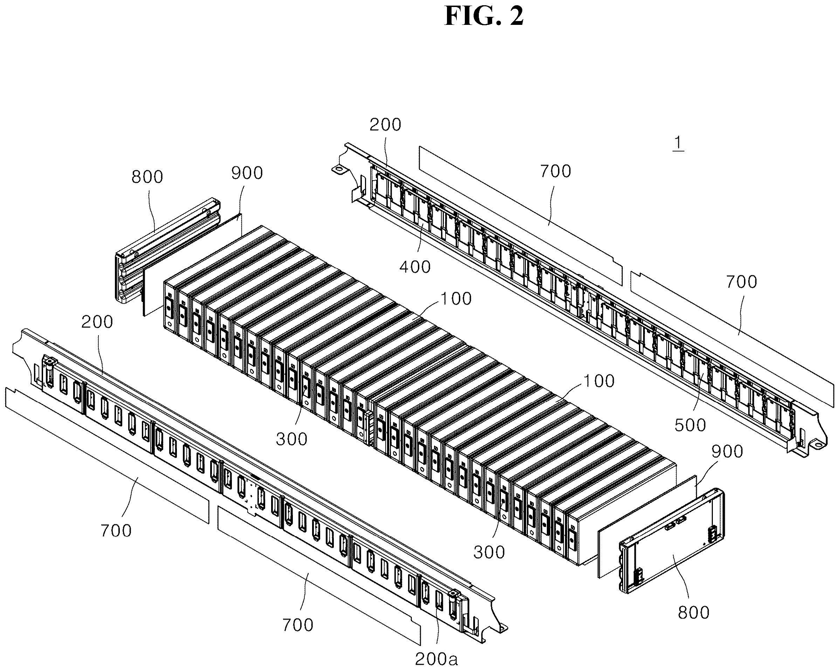

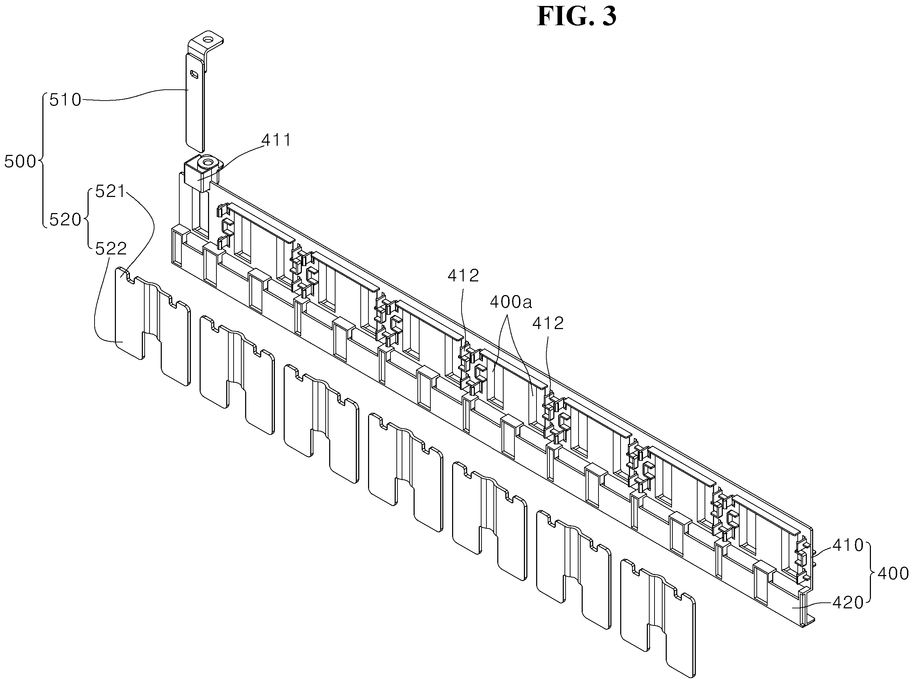

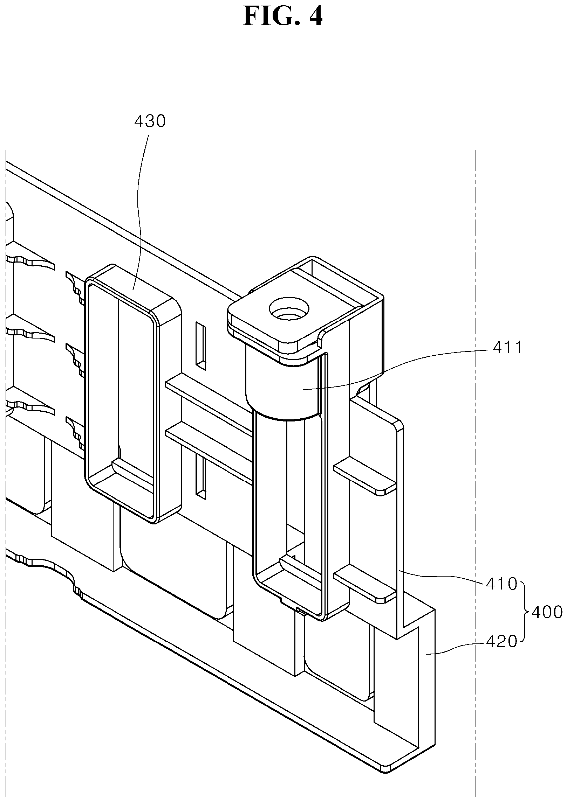

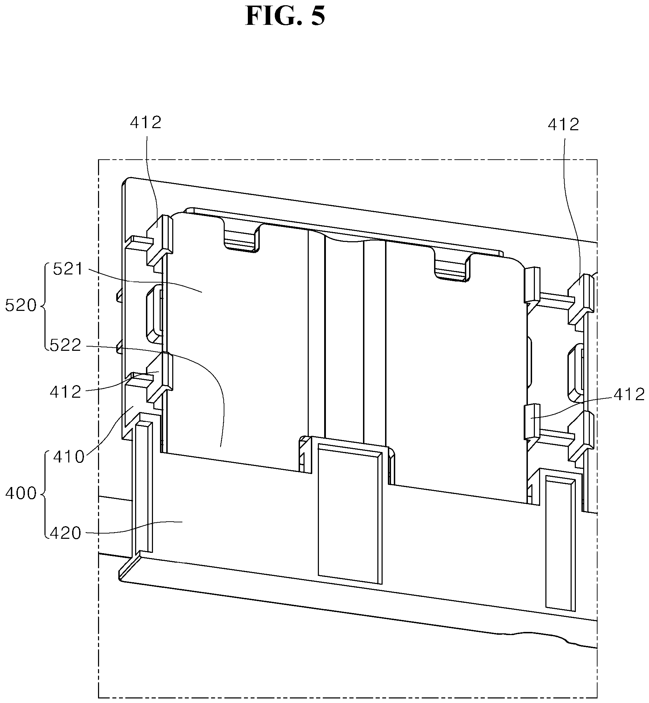

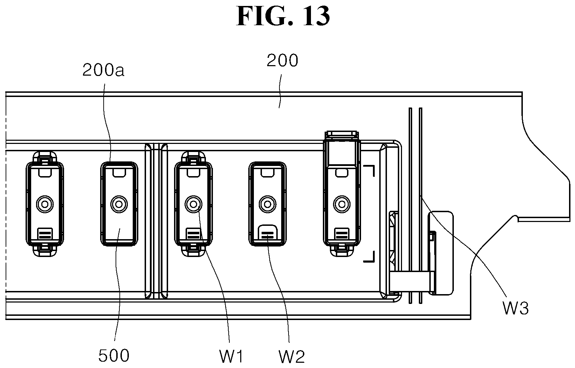

FIG. 1 is a perspective view schematically showing a battery module according to an embodiment of the present invention, FIG. 2 is an exploded perspective view schematically showing a battery module according to an embodiment of the present invention, FIG. 3 is an exploded perspective view schematically showing a coupling relationship between a busbar holder and a busbar in a battery module according to an embodiment of the present invention, FIG. 4 is a perspective view schematically showing a busbar holder in a battery module according to an embodiment of the present invention, FIG. 5 is a perspective view schematically showing a busbar coupled to a busbar holder in a battery module according to an embodiment of the present invention, and FIG. 13 is a view schematically showing a welded state of a battery module according to an embodiment of the present invention.

Referring to FIGS. 1 to 5 and 13, a battery module 1 according to an embodiment of the present invention includes battery cells 100, side plates 200, cell terminals 300, busbar holders 400, and busbars 500.

The battery cells 100 function as a unit structure that stores and supplies power in the battery module 1.

A plurality of battery cells 100 may be provided. The plurality of battery cells 100 may be arranged in a direction. In adjacent battery cells 100, a rear side of a battery cell 100 and a front side of another battery cell 100 are disposed in parallel to face each other.

A number of battery cells 100 is not limited to that illustrated in FIGS. 1 and 2 and may be designed in various ways depending on a size of the battery module 1 or the like.

The side plate 200 is disposed to surround sides of the battery cells 100 and may protect the battery cells 100 from external foreign substances and impacts.

The side plates 200 may be formed to have a shape of a plate disposed to face the sides of the battery cells 100. The side plate 200 has a length extending in the arrangement direction of the plurality of battery cells 100 and may be disposed parallel to the sides of the battery cells 100.

The side plates 200 may be disposed to be spaced at an interval (e.g., a set interval) from the sides of the battery cells 100. Accordingly, the side plates 200 may provide a space between the sides of the battery cells 100 where the busbar holders 400, which will be described below, may be installed.

The side plates 200 may be provided with a first opening portion 200a. The first opening portion 200a may be formed by passing through an outer surface of the side plate 200. A plurality of first opening portions 200a may be disposed to be spaced apart from each other in a longitudinal direction of the side plates 200. The plurality of first opening portions 200a may be disposed to individually face second opening portions 400a of the busbar holders 400, which will be described below.

The side plates 200 may be provided in a pair. The pair of side plates 200 may be disposed such that inner surfaces thereof individually face both, or opposite, sides of the battery cells 100.

The cell terminals 300 may protrude from the sides of the battery cells 100 toward the side plates 200. The cell terminals 300 may be provided in a pair. In an embodiment, the pair of cell terminals 300 may be symmetrically disposed on both, or opposite, sides of the battery cell 100. The pair of cell terminals 300 may have different polarities.

The pair of cell terminals 300 protrude from both sides, or opposite, of the battery cells 100 in different directions, and end portions thereof may each be disposed to face one of the pair of side plates 200. The cell terminal 300 may be disposed to face the first opening portion 200a.

The busbar holders 400 may be disposed between the side plates 200 and the battery cells 100. The busbar holders 400 may be coupled to the side plates 200. The busbar holders 400 may be formed to have a substantially flat shape. The busbar holders 400 may be disposed such that both sides thereof are parallel to and face the sides of side plates 200 and the battery cells 100. The busbar holder 400 may be coupled to the side plate 200, located between the side plate 200 and the battery cell 100, and comprising a second opening portion 400a in communication with the first opening portion 200a.

The busbar holders 400 may be provided in a pair. In an embodiment, the pair of busbar holders 400 may be symmetrically disposed on both, or opposite, sides of the battery cell 100. One of the pair of busbar holders 400 is disposed between the side plate 200 and the cell terminal 300 disposed on a side of the battery cell 100, and the other of the busbar holders 400 may be disposed between the side plate 200 and the cell terminal 300 disposed on another side of the battery cell 100.

The busbar holder 400 may be provided with the second opening portion 400a. The second opening portion 400a may be formed by passing through the outer surface of the busbar holder 400. A plurality of second opening portions 400a may be disposed to be spaced apart from each other in a longitudinal direction of the busbar holders 400 so as to be in communication with the first opening portions 200a.

The plurality of second opening portions 400a may be disposed to individually face the plurality of first opening portions 200a, and may be disposed to individually face the plurality of cell terminals 300.

The busbar holder 400 may include a busbar support portion 410 and a busbar seating portion 420. The busbar support portion 410 may support the busbar 500 which will be described below.

The busbar seating portion 420 may protrude from the busbar support portion 410. The busbar seating portion 420 is provided on a lower side of the busbar support portion 410 and may be bent at a lower end portion of the busbar support portion 410 to protrude in a width direction of the busbar support portion 410. The busbar 500 may be seated on the busbar seating portion 420.

The busbar 500 may be supported by the busbar holder 400. The busbar 500 is provided on the inner side of the busbar holder 400 facing the battery cell 100 and may cover the second opening portion 400a. The busbars 500 may be made of an electrically conductive material such as copper, aluminum, or nickel. The busbar 500 may be supported by the busbar holder 400, covering the second opening portion 400a, and may be connected to the cell terminal 300.

A plurality of busbars 500 may be provided. The plurality of busbars 500 may be individually connected to the plurality of cell terminals 300 to connect the plurality of battery cells 100 in series or parallel.

In an embodiment, the busbar 500 and the cell terminal 300 may be melt-joined by welding. In an embodiment, the busbar 500 and the cell terminal 300 may be laser-welded through the first opening portion 200a and the second opening portion 400a to form a first welded portion W1. The busbar 500 may include a first busbar 510 and a second busbar 520.

The first busbar 510 may be disposed on a first side of the busbar holders 400 in the longitudinal direction. The first busbar 510 may be provided in a pair. The pair of first busbars 510 may be disposed on both sides of the busbar holders 400 in the longitudinal direction.

A plurality of second busbars 520 may be arranged to be spaced apart from each other in the longitudinal direction of the busbar holders 400. When a pair of first busbars 510 are disposed on both sides of the busbar holders 400 in the longitudinal direction, a plurality of second busbars 520 may be disposed between the pair of first busbars 510.

The second busbar 520 may include a busbar body portion 521 and a busbar extension portion 522. The busbar body portion 521 may be fixed to the busbar support portion 410. The busbar body portion 521 may be in contact with the cell terminal 300.

The busbar extension portion 522 may extend downward from the busbar body portion 521 and is accommodated inside the busbar seating portion 420 such that the second busbar 520 may be upright and perpendicular to the busbar holder 400.

In an embodiment, the second busbar 520 comprises a busbar body portion 521 fixed to the busbar support portion 410 by the locking member 412 and in contact with the cell terminal 300 and a busbar extension portion 522 extending from the busbar body portion 521 and accommodated in the busbar seating portion 420.

The busbar support portion 410 may be provided with a holder ring portion 411. The holder ring portion 411 may be provided around (e.g., to surround) the first busbar 510. The first busbar 510 passes downwardly through the holder ring portion 411 and the lower end portion of the first busbar 510 is accommodated inside the busbar seating portion 420 such that the first busbar 510 may be upright and perpendicular to the busbar holder 400.

The busbar support portion 410 may be provided with a locking member 412. The second busbar 520 may be fixedly locked to the busbar support portion 410 by the locking member 412. The locking member 412 may be provided on an edge of the second opening portion 400a. The locking member 412 may be provided as a pair of locking members on both, or opposite, sides of the edge of the second opening portion 400a such that the busbar body portion 521 may be fixed to the busbar support portion 410.

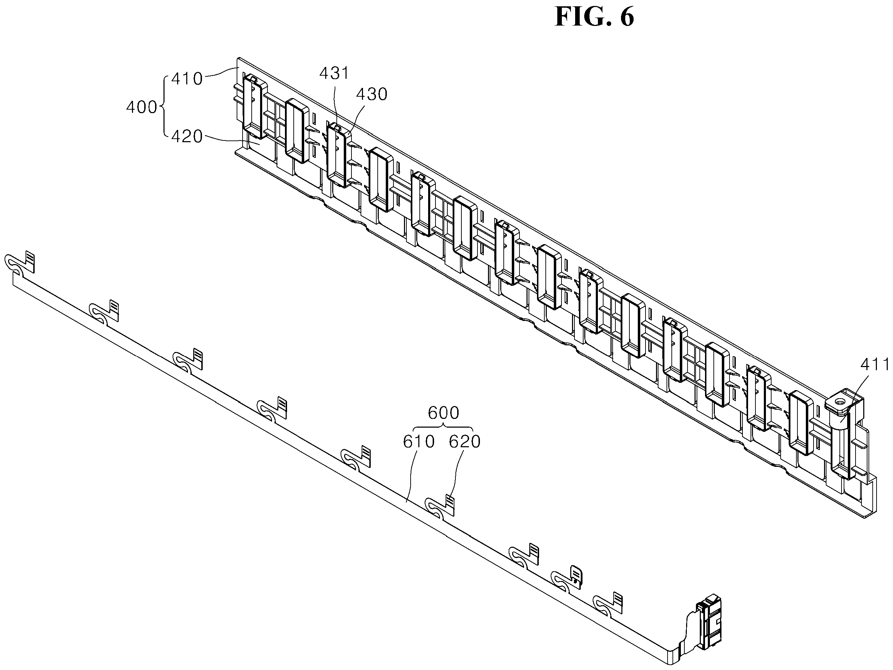

FIG. 6 is an exploded perspective view showing a coupling relationship between a busbar holder and a flexible substrate in a battery module according to an embodiment of the present invention.

Referring to FIGS. 6 and 13, the battery module 1 according to an embodiment of the present invention may further include a flexible substrate 600. The flexible substrate 600 may be on the busbar holder 400. The flexible substrate 600 may be a flexible printed circuit assembly (FPCA) or a flexible printed circuit board (FPCB). In an embodiment, the flexible substrate 600 may be electrically connected to the busbar 500.

The flexible substrate 600 may include a substrate main body 610 and a sensor unit 620. The substrate main body 610 may be coupled to the outer surface of the busbar holder 400. The substrate main body 610 may be coupled to the busbar holder 400 by any suitable type of coupling method, such as bolting, welding, adhesion, insertion coupling, or engagement coupling.

The sensor unit 620 may extend upward from the substrate main body 610. A plurality of sensor units 620 may be disposed to be spaced apart from each other in a longitudinal direction of the substrate main body 610. The plurality of sensor units 620 may be in individual contact with the plurality of busbars 500. The sensor unit 620 may measure state information of the battery cell 100 such as the voltage and/or temperature of the battery cell 100. The sensor unit 620 and the busbar 500 may be joined to each other by welding to form a second welded portion W2.

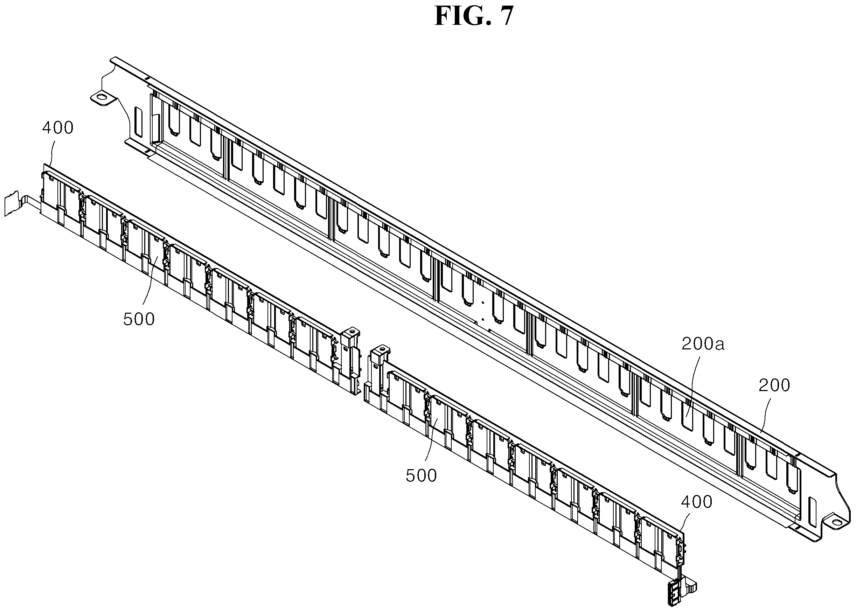

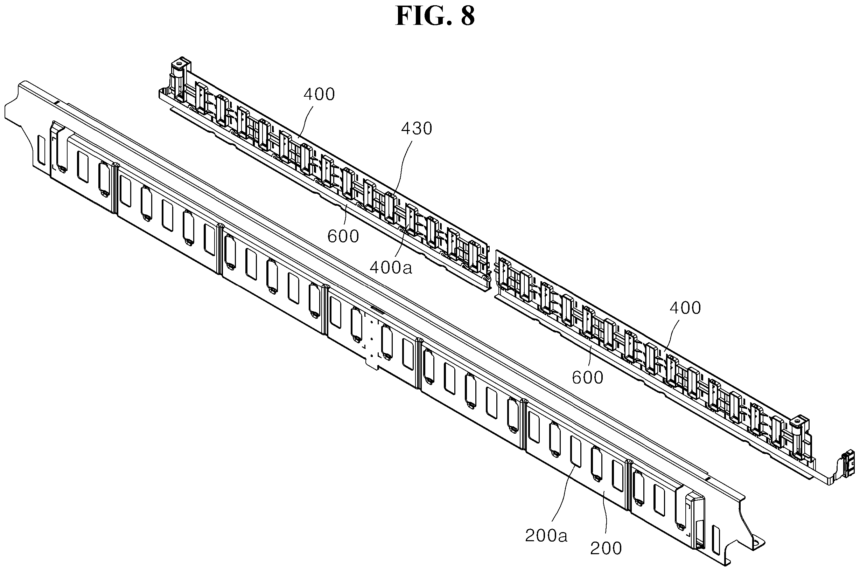

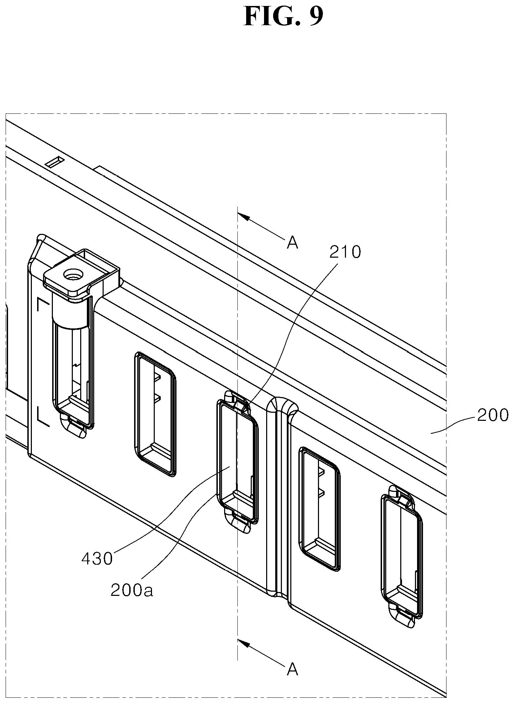

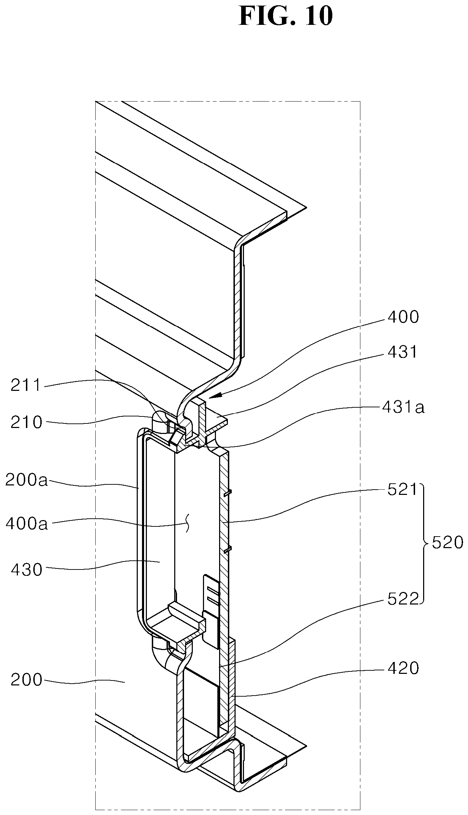

FIGS. 7 and 8 are exploded perspective views showing a coupling relationship between side plates and busbar holders in a battery module according to an embodiment of the present invention, FIG. 9 is a perspective view schematically showing a busbar holder coupled to a side plate in a battery module according to an embodiment of the present invention, and FIG. 10 is a cross-sectional view along the line A-A in FIG. 9.

Referring to FIGS. 7 to 10, the busbar holder 400 may be coupled to the side plate 200.

The busbar holder 400 may be provided with a protrusion 430. The protrusion 430 may be formed to protrude from an outer surface of the busbar holder 400 facing the side plate 200. The protrusion 430 may be formed along the edge of the second opening portion 400a.

In an embodiment, the protrusion 430 may comprise a coupling member 431 to be caught on and coupled to the side plate 200.

The protrusion 430 may have a diameter smaller than a diameter of the first opening portion 200a. Therefore, the protrusion 430 may be inserted inside the first opening portion 200a.

The protrusion 430 may be provided with a coupling member 431 that is caught on and coupled to the side plate 200. The side plate 200 may be provided with a coupling groove 210. The coupling groove 210 may be recessed in the edge of the first opening portion 200a. The coupling groove 210 may be provided with a locking protrusion 211 that catches the coupling member 431. The coupling member 431 may include a hook portion 431a that is caught on the locking protrusion 211.

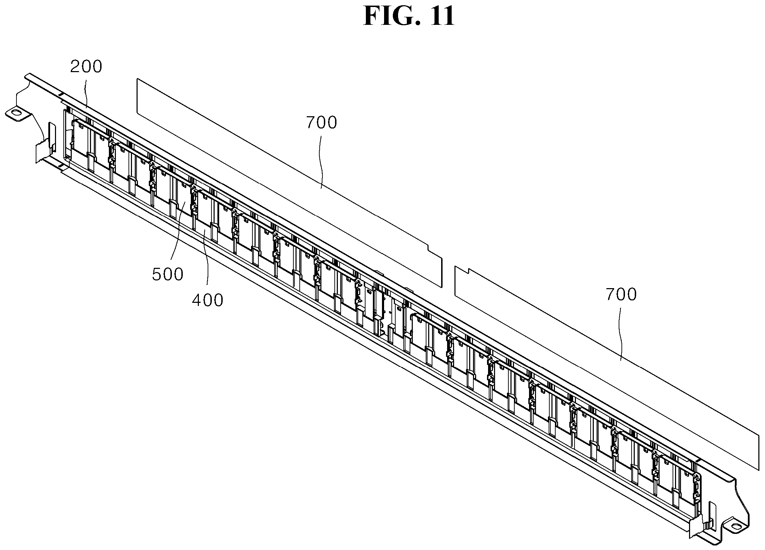

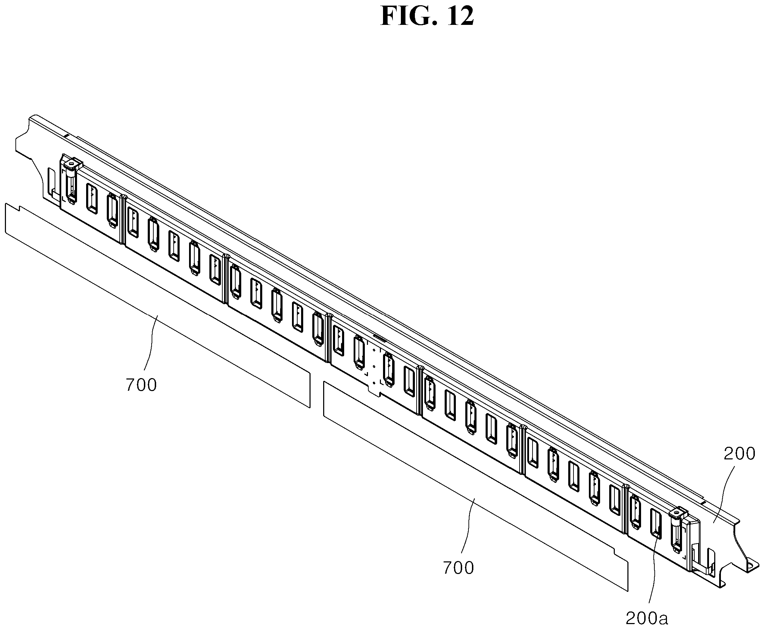

FIGS. 11 and 12 are exploded perspective views showing a coupling relationship between side plates and first insulating members in a battery module according to an embodiment of the present invention.

Referring to FIGS. 1, 2, 11 and 12, the battery module 1 according to an embodiment of the present invention may further include a first insulating member 700. The first insulating member 700 may be on the side plate 200. The first insulating member 700 may be coupled to an outer surface of the side plate 200 facing a width direction of the battery module 1.

The first insulating member 700 may be coupled to the side plate 200 by any suitable type of coupling method such as bolting, welding, adhesion, insertion coupling, or engagement coupling. The first insulating member 700 may cover the first opening portion 200a. The first insulating member 700 may cover the first opening portion 200a and prevent or substantially prevent foreign substances from entering through the first opening portion 200a. The first insulating member 700 may cover the first opening portion 200a such that the busbar 500 exposed through the first opening portion 200a is insulated.

Referring to FIGS. 2 and 13, the battery module 1 according to an embodiment of the present invention may further include end plates 800 and second insulating members 900.

The end plates 800 may be disposed to intersect with the side plates 200 and each face one of the front and rear sides of the battery cells 100. More specifically, the end plates 800 are provided in a pair, the pair of end plates 800 may be disposed such that inner surfaces thereof each face one of the front sides of the battery cells 100 disposed at an end of the plurality of battery cells 100 and the rear sides of the battery cells 100 disposed at another ends of the plurality of battery cells 100.

The end plate 800 may be formed to have a substantially plate shape. The end plates 800 each have a length extending in a direction perpendicular to the arrangement direction of the plurality of battery cells 100 and may be disposed parallel to the front and rear sides of the battery cells 100.

Both ends of the end plates 800 may be coupled to the side plates 200. More specifically, both ends of one of the pair of end plates 800 may be coupled to fisrt ends of the pair of side plates 200, and both ends of the other of the pair of end plates 800 are coupled to second ends of the pair of side plates 200.

In an embodiment, the side plate 200 and the end plate 800 may be melt-joined by welding. The side plate 200 and the end plate 800 may be welded (e.g., laser-welded) to form a third welded portion W3.

The second insulating member 900 may be disposed between the battery cell 100 and the end plate 800. The second insulating member 900 may be formed to have a substantially plate shape. The second insulating member 900 may insulate between the battery cell 100 and the end plate 800.

Although the present disclosure has been described with reference to some example embodiments and drawings illustrating aspects thereof, the present disclosure is not limited thereto.

## Claims

1. A battery module (1) comprising:
a battery cell (100);
a side plate (200) facing a side of the battery cell (100) and comprising a first opening portion (200a);
a cell terminal (300) protruding from the battery cell (100) toward the side plate (200);
a busbar holder (400) coupled to the side plate (200), located between the side plate (200) and the battery cell (100), and comprising a second opening portion (400a) in communication with the first opening portion (200a); and
a busbar (500) supported by the busbar holder (400), covering the second opening portion (400a), and connected to the cell terminal (300).

2. The battery module (1) of claim 1, wherein the side plate (200), the cell terminal (300), and the busbar holder (400) are provided as a pair of side plates (200), a pair of cell terminals (300), and a pair of busbar holders (400), which are symmetrically disposed on both sides of the battery cell (100).

3. The battery module (1) of claim 1 or 2, wherein the busbar (500) and the cell terminal (300) are melt-joined by welding.

4. The battery module (1) of any of claims 1 to 3, wherein the busbar holder (400) comprises:
a busbar support portion (410) supporting the busbar (500); and
a busbar seating portion (420) protruding from the busbar support portion (410) and on which the busbar (500) is seated.

5. The battery module (1) of any of claims 1 to 4, wherein the busbar (500) comprises:
first busbars (510) arranged on a first side or both sides of the busbar holder (400) in a longitudinal direction; and
second busbars (520) arranged to be spaced apart from each other in the longitudinal direction of the busbar holder (400).

6. The battery module (1) of claim 4 or 5, wherein the busbar support portion (410) comprises a holder ring portion (411) surrounding the first busbar (510).

7. The battery module (1) of any of claims 4 to 6, wherein the busbar support portion (410) comprises a locking member (412) for fixedly locking the second busbar (520).

8. The battery module (1) of any of claims 5 to 7, wherein the second busbar (520) comprises:
a busbar body portion (521) fixed to the busbar support portion (410) by the locking member (412) and in contact with the cell terminal (300); and
a busbar extension portion (522) extending from the busbar body portion (521) and accommodated in the busbar seating portion (420).

9. The battery module (1) of any of claims 1 to 8, further comprising a flexible substrate (600) on the busbar holder (400) and electrically connected to the busbar (500).

10. The battery module (1) of claim 9, wherein the flexible substrate (600) comprises:
a substrate main body (610) coupled to the busbar holder (400); and
a sensor unit (620) extending from the substrate main body (610) and in contact with the busbar (500).

11. The battery module (1) of any of claims 1 to 10, further comprising a first insulating member (700) on the side plate (200) and covering the first opening portion (200a).

12. The battery module (1) of any of claims 1 to 11, wherein the busbar holder (400) comprises a protrusion (430) protruding along an edge of the second opening portion (400a) and inserted in the first opening portion (200a).

13. The battery module (1) of claim 12, wherein the protrusion (430) comprises a coupling member (431) to be caught on and coupled to the side plate (200).

14. The battery module (1) of any of claims 1 to 13, further comprising end plates (800) facing a front and a rear of the battery cell (100).

15. The battery module (1) of claim 14, further comprising a second insulating member (900) between the battery cell (100) and an end plate (800) of the end plates.
